# EUROPEAN PATENT APPLICATION

(11) **EP 3 133 381 A1**
(43) Date of publication of application: **22.02.2017**
(21) Application number: 15779268.0
(22) Date of filing: 14.04.2015
(51) Int. Cl.: G01L 5/00, F16C 41/00, G01L 1/02

(54) **LOAD SENSOR-EQUIPPED BEARING DEVICE**

(30) Priority: 14.04.2014 JP 2014082509
(71) Applicant: NSK Ltd., Tokyo 141-8560 (JP)
(72) Inventor: MATSUDA Yasuyuki, Fujisawa-shi, Kanagawa 251-8501 (JP); UEDA Tohru, Fujisawa-shi, Kanagawa 251-8501 (JP); HIKIDA Masafumi, Fujisawa-shi, Kanagawa 251-8501 (JP)
(74) Representative: Grünecker Patent- und Rechtsanwälte PartG mbB
(86) International application number: PCT/JP2015/061516
(87) International publication number: WO 2015/159899

(57) **Abstract**

A bearing raceway ring (25) disposed near a mounting section (9) is disposed on the outer periphery of a circular cylinder section (19). A fluid-sealed chamber (40) in which a measurement liquid is hermetically enclosed is provided between a first member (8) and the bearing raceway ring (25) which is disposed near the mounting section (9). Pressure acting on the fluid to be measured changes as the bearing raceway ring (25) moves in the cylinder-axis direction, the bearing raceway ring (25) being disposed near the mounting section (9). The fluid-sealed chamber (40) is provided with a pressure sensor (44) capable of detecting a change in the pressure of the fluid to be measured.

## Description

### TECHNICAL FIELD

The present disclosure relates to a technology of measuring load in a direction of pressing a bearing, and more particularly to, a load sensor-equipped bearing device to be incorporated to a suspension of an automobile and configured to measure tire load.

### RELATED ART

In an automobile, particularly a commercial vehicle such as a truck, a van and the like for transporting a variety of goods, an illegal overloaded vehicle that travels on a road with exceeding legal load capacity becomes a social issue. The overloading reason is that it is possible to save the transportation cost when carrying many goods at one time.

However, the overloading should be avoided because it can cause a variety of problems, as follows.
(1) The overloading may deteriorate motion performance of the automobile and damage constitutional components. Therefore, for example, an axle (hub) is broken, a tire is damaged (burst), a braking distance increases, a brake is overheated and poorly operates, and a vehicle is likely to overturn. That is, an accident may be caused.
(2) Since the overloading causes severe damage to the road, the maintenance cost of the road increases.

There are many causes that it is difficult to prevent the overloading. One of them is that a driver, a passenger and the like cannot easily recognize the loaded weight. In the related art, a vehicle to be measured is put on a platform scale so as to measure load of the vehicle (loaded weight). However, the installation of the platform scale requires a large facility and a wide installation space, so that the installation cost increases. Therefore, the number of platform scales to be installed is limited, so that it is difficult to measure many vehicles.

Therefore, in recent years, a load measurement device configured to be mounted on a vehicle itself and to measure the load thereof has been suggested, as disclosed in Patent Document 1.

For example, the load measurement device disclosed in Patent Document 1 includes a base assembly, a sensor device for compression strain detection and a circuit board. Two weld parts of the base assembly are welded to different mounting places of a loaded member configured to expand and contract as vehicle load is applied thereto. The sensor device for compression strain detection is supported by the base assembly. Also, as the vehicle load changes, the base assembly expands and contracts in a direction in which the two weld parts come close to and separate from each other, so that an output of the sensor device for compression strain detection changes. The circuit board is mounted thereon with an amplifier configured to amplify the output of the sensor device for compression strain detection. Like this, the load measurement device disclosed in Patent Document 1 is a load measurement device configured to measure load by detecting the compression strain.

However, according to the load measurement device of the related art like Patent Document 1, since the configuration is complicated and it is necessary to provide the circuit board, the amplifier and the like, the cost increases. Also, since the load measurement device is disposed at a place at which it is likely to be shocked, a problem may be caused to the circuit board, the amplifier and the like.

### CITATION LIST

### PATENT DOCUMENTS

Patent Document 1: Japanese Patent Application Publication No. 2001-330503A

### SUMMARY

### PROBLEMS TO BE SOLVED

The present disclosure has been made to solve the above problems, and an object of the present disclosure is to provide a simple and inexpensive load sensor-equipped bearing device configured to detect load in a compression direction acting on a bearing configured to rotatably support axial load, thereby preventing overloading of a vehicle.

### MEANS FOR SOLVING THE PROBLEMS

In order to achieve the above object, the present disclosure provides a load sensor-equipped bearing device including:
a first member having a mounting part to be fixed to a vehicle-side and a cylindrical part protruding from the mounting part;
a second member fixed to an end portion of the cylindrical part of the first member in a cylinder-axis direction and disposed at a wheel-side;
a pair of bearing raceway rings interposed between the first member and the second member and configured to rotatably support an axial load about the cylindrical part serving as an axis center, and
a rolling element incorporated between the pair of bearing raceway rings,
wherein the bearing raceway ring disposed close to the mounting part is disposed on an outer periphery of the cylindrical part,
wherein a fluid-sealed chamber in which a fluid to be measured is hermetically enclosed is provided between the first member and the bearing raceway ring disposed close to the mounting part,
wherein a pressure acting on the fluid to be measured changes as the bearing raceway ring disposed close to the mounting part moves in the cylinder-axis direction, and
wherein the fluid-sealed chamber is provided with a pressure sensor capable of detecting the change in the pressure of the fluid to be measured.

In the load sensor-equipped bearing device of the present disclosure, the first member may be a cylinder configuring a suspension and to be fixed to the vehicle-side,
the second member may be a washer configuring the suspension and configured to contact one end of a spring,
the pair of bearing raceway rings may include an outer ring disposed on the outer periphery of the cylindrical part of the cylinder and an inner ring disposed at the washer, and the pair of bearing raceway rings may be configured to rotatably support the axial load,
the fluid-sealed chamber may be formed between the mounting part and the cylindrical part of the cylinder and the outer ring, and
the pressure sensor may be provided to the fluid-sealed chamber via the mounting part of the cylinder and a detection unit of the pressure sensor may be disposed to face toward an inside of the fluid-sealed chamber.

### BRIEF DESCRIPTION OF THE DRAWINGS

FIG. 1 is a schematically exploded perspective view depicting a load sensor-equipped bearing device.
FIG. 2 is a longitudinal sectional front view depicting the load sensor-equipped bearing device.
FIG. 3 is a plan view depicting the load sensor-equipped bearing device.
FIG. 4 is a perspective view of a state where a mount to be coupled to a vehicle body-side is provided on an outer surface of a cylinder, depicting the load sensor-equipped bearing device.
FIG. 5 is a plan view depicting a state where the load sensor-equipped bearing device is incorporated to a suspension.
FIG. 6 is a longitudinal sectional side view depicting a state where the load sensor-equipped bearing device is incorporated to the suspension.

### DETAILED DESCRIPTION OF EMBODIMENTS

Hereinafter, an embodiment of a load sensor-equipped bearing device (which may also be referred to as a bearing device) of the present disclosure will be described with reference to the drawings. This embodiment relates to an example where the bearing device is used for a suspension of an automobile. In the meantime, the embodiment is just an embodiment of the present disclosure, is not construed to limit the present disclosure and can be design-changed within the scope of the present disclosure.

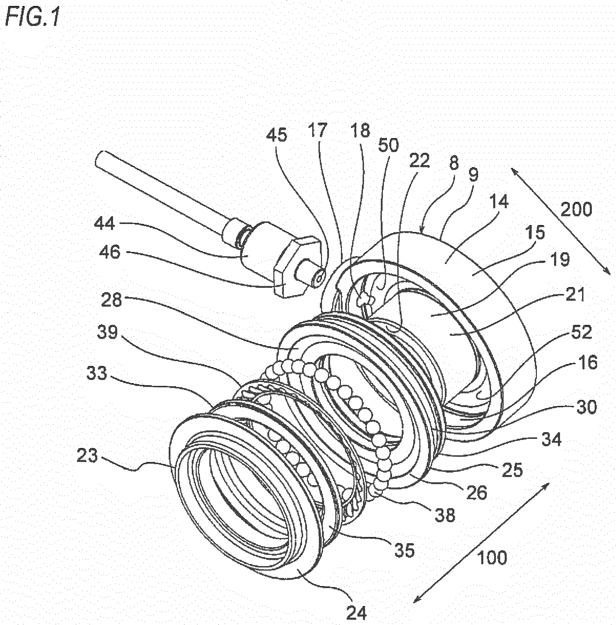

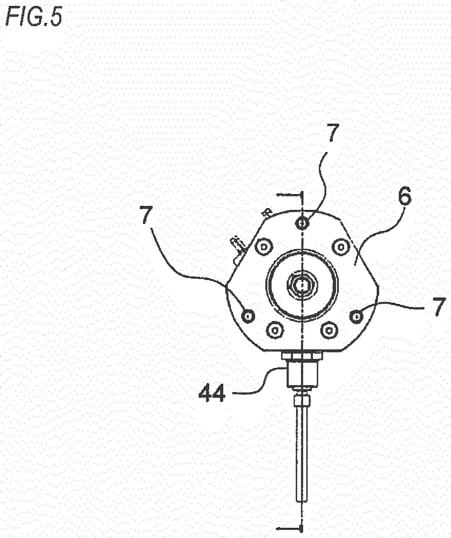

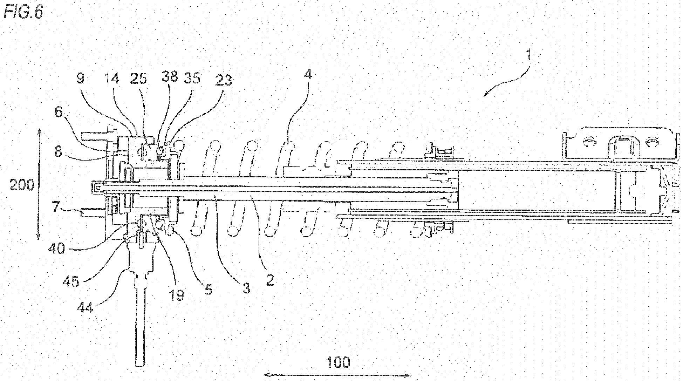

FIGS. 1 to 4 depict the bearing device of the embodiment. FIGS. 5 and 6 depict an example where the bearing device of the embodiment is incorporated to a suspension 1 of an automobile (for example, a small commercial vehicle such as a truck, a van or the like). Although not shown, an upper side of the suspension 1 is fixed to a main body frame (cross member) of the automobile, and a lower side is fixed to an axle via a lower arm pivotally mounted to a frame. In the meantime, the suspension I has a well-known configuration, except that the bearing device of the embodiment is incorporated thereto, is not construed to be limited to the shown example and can be appropriately design-changed. In the drawings, a reference numeral 2 indicates a shock absorber and a reference numeral 4 indicates a coil spring. In the below, the bearing device will be described in detail and the description of the other configurations of the suspension 1 will be omitted.

The bearing device of the embodiment is a rolling bearing device configured to rotatably support axial load in a compression direction. Also, the bearing device has a first member (cylinder) 8 and a second member (washer) 23. The first member (cylinder) 8 has a mounting part 9 to be fixed to a vehicle-side and a cylindrical part 19 protruding from the mounting part 9. The first member 8 configures the suspension 1. The second member (washer) 23 is disposed at a wheel-side with being integrally mounted to the first member (cylinder) 8 in a vertical direction, and one end 5 of a coil spring 4 is contacted thereto in the vertical direction. In the meantime, the second member (washer) 23 also configures the suspension 1.

Also, the bearing device has a pair of bearing raceway rings (an outer ring 25 and an inner ring 35), a plurality of rolling elements (steel balls) 38, a holder 39, a fluid-sealed chamber 40 formed between the first member (cylinder) 8 and the bearing raceway ring (outer ring 25). The pair of bearing raceway rings (an outer ring 25 and an inner ring 35) are interposed between the first member (cylinder) 8 and the second member (washer) 23. The pair of bearing raceway rings (an outer ring 25 and an inner ring 35) are configured to relatively rotate. The plurality of rolling elements (steel balls) 38 are incorporated between the pair of bearing raceway rings (outer ring 25 and inner ring 35). The holder 39 is configured to hold the plurality of rolling elements 38. The fluid-sealed chamber 40 is formed between the first member (cylinder) 8 and the bearing raceway ring (outer ring 25) disposed near the mounting part 9, and a pressure sensor 44 configured to detect a change in pressure in the fluid-sealed chamber 40.

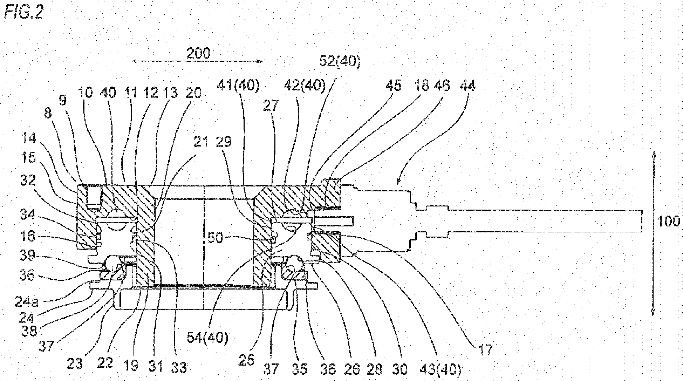

The mounting part 9 of the first member (cylinder) 8 has a disc-shaped mounting part main body 10 having a through-hole 13 formed at a center and an annular flange 14 protruding an outer periphery of the mounting part main body 10 (refer to FIGS. 1 and 2). The mounting part main body 10 and the annular flange 14 are integrally formed.

The annular flange 14 has a predetermined height in a vertical direction (direction denoted with an arrow 100, in the drawings) and a predetermined thickness in a horizontal direction (direction denoted with an arrow 200, in the drawings). The annular flange 14 is formed at its predetermined position with a sensor mounting hole 18 penetrating the annular flange 14 in the horizontal direction (refer to FIGS. 1 and 2).

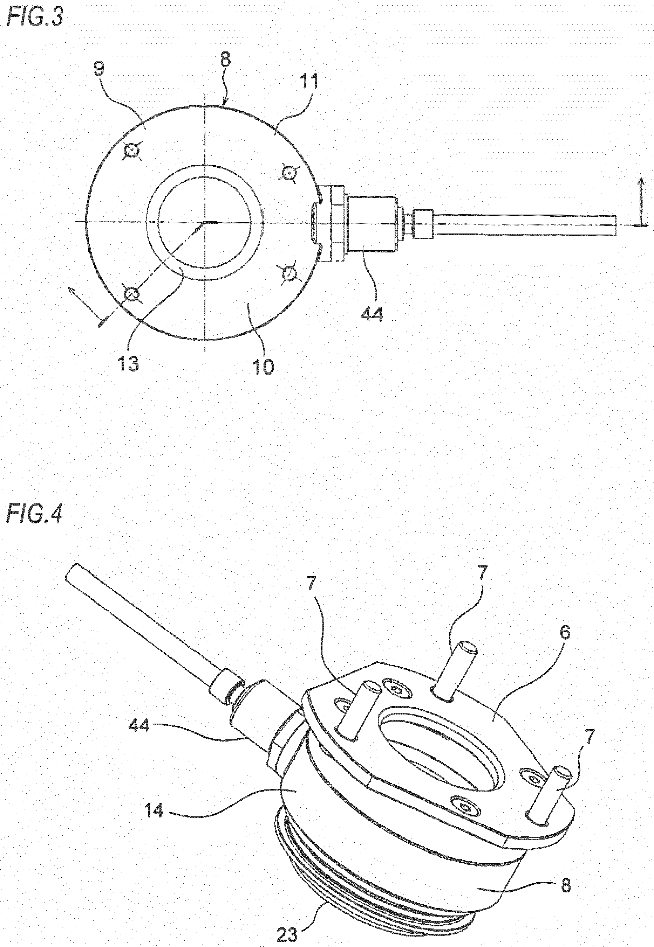

As shown in FIGS. 4 to 6, a mount 6 to be fixed to the vehicle-side is integrally mounted to an outer surface (planar surface) 11 of the mounting part main body 10. In the drawings, a reference numeral 7 indicates a bolt for fastening a vehicle-side (vehicle body-side) (not shown) and the suspension 1.

The cylindrical part 19 has a cylinder shape protruding from an inner surface 12 of the mounting part main body 10 and having a predetermined outer diameter. The cylindrical part 19 has a second through-hole 20 coaxial with the through-hole 13 of the mounting part main body 10 and having the same inner diameter. The cylindrical part 19 is coaxial with the annular flange 14 of the mounting part 9, has an outer diameter smaller than an inner diameter of the annular flange 14, and more protrudes in the vertical direction (direction denoted with the arrow 100, in the drawings) than the annular flange 14 (refer to FIG. 2). In FIG. 6, a reference numeral 3 indicates a piston rod of the shock absorber 2 penetrating the second through-hole 20 of the cylindrical part 19 and the through-hole 13 of the mounting part main body 10 and integrally mounted to the cylinder 8.

An annular space 50 having a predetermined depth in the vertical direction is formed between an outer periphery (an outer diameter surface) 21 of the cylindrical part 19 and an inner periphery (an inner diameter surface) 16 of the annular flange 14 (refer to FIG. 2). The inner surface (bottom surface) 12 of the mounting part main body 10 positioned in the annular space 50 is provided with a first groove portion 52 concentric with the annular flange 14 and the cylindrical part 19. The first groove portion 52 has a circular ring shape as seen in the vertical direction (refer to FIG. 1), and has a semi-circular shape as seen from a section (refer to FIG. 2). In the annular space 50, one bearing raceway ring (outer ring) 25 externally fitted to the outer periphery 21 of the cylindrical part 19 is disposed. The outer ring 25 is configured to be slidable in a cylinder-axis direction (which is the same direction as the vertical direction denoted with the reference numeral 100, in the drawings) with respect to each of the cylindrical part 19 and the annular flange 14.

The outer ring 25 has a circular ring shape that is thick in the vertical direction (direction denoted with the reference numeral 100, in the drawings) and in the horizontal direction (direction denoted with the reference numeral 200, in the drawings). A lower surface-side (bottom surface-side) 26 in the vertical direction of the outer ring 25 is formed with an outer ring raceway 28. An upper surface-side (planar surface-side) 27 in the vertical direction of the outer ring 25 is provided with a second groove portion 54 concentric with the annular flange 14 and the cylindrical part 19 (refer to FIG. 2). The second groove portion 54 has a circular ring shape as seen in the vertical direction, and has a semi-circular shape as seen from a section. That is, the first groove portion 52 and the second groove portion 54 have line-symmetric shapes.

The outer ring 25 has an inner diameter in which the outer ring can be externally fitted to the outer periphery (outer diameter) 21 of the cylindrical part 19. The outer ring 25 has an outer diameter in which the outer ring 25 can be internally fitted to the inner periphery (inner diameter) 16 of the annular flange 14.

Also, an inner peripheral surface (inner diameter surface) 29 and an outer peripheral surface (outer diameter surface) 30 of the outer ring 25 are respectively provided with annular seal grooves 31, 32. Hermetic seals 33, 34 are disposed in each of the seal grooves 31, 32. Thereby, the hermetic seal (inner seal) 33 is brought into contact with the outer periphery 21 of the cylindrical part 19 of the cylinder 8 to seal between the outer ring 25 and the cylindrical part 19, and the hermetic seal (outer seal) 34 is brought into contact with the inner periphery 16 of the annular flange 14 of the cylinder 8 to seal between the outer ring 25 and the annular flange 14. The inner seal 33 and the outer seal 34 are not particularly limited inasmuch as they can prevent a predetermined fluid to be measured enclosed in the fluid-sealed chamber 40 from being leaked outside and foreign matters such as wastes, dusts and the like from being introduced into the fluid-sealed chamber 40.

The second member (washer) 23 is integrally fixed to an end portion 22 in the cylinder-axis direction of the cylindrical part 19 of the first member (cylinder) 8 and is disposed at the wheel-side. The second member (washer) 23 is provided with a flange part 24 protruding in a circular ring shape in the horizontal direction. The one end 5 of the coil spring 4 is butted to the flange part 24 in the vertical direction (refer to FIGS. 2 and 6).

The inner ring 35 is disposed with being integrally fitted to an outer surface (surface facing the mounting part main body 10) 24a of the flange part 24 of the washer 23. The inner ring 35 has a circular ring shape and is formed with an inner ring raceway 37 at its outer surface-side (upper surface-side facing the outer ring raceway 28) 36 in the vertical direction.

Therefore, the plurality of rolling elements 38 is incorporated to the outer ring raceway 28 and the inner ring raceway 37 of the outer ring 25 and the inner ring 35 facing each other via the holder 39. As described above, the outer ring 25 and the inner ring 35 are disposed between the cylinder 8 and the washer 23. The outer ring 25 and the inner ring 35 are configured to rotatably support axial load (load in the same direction as the vertical direction denoted with the reference numeral 100, in the drawings) about the cylindrical part 19 of the cylinder 8 serving as an axis center.

The fluid-sealed chamber (hydraulic chamber) 40 is configured to be in a sealed state capable of being sealed from an outside by a fitting area (fitting area until the inner seal 33) 41 between the outer ring 25 and the cylindrical part 19 of the cylinder 8, a space area 42 between the outer ring 25 and the inner surface 12 of the mounting part main body 10 of the cylinder 8, and a fitting area (fitting area until the outer seal 34) 43 between the outer ring 25 and the annular flange 14.

The first groove portion 52 formed on the inner surface 12 of the mounting part main body 10 of the cylinder 8 and having a semi-circular shape, as seen from a section, and the second groove portion 54 formed on the outer ring 25 and having a semi-circular shape, as seen from a section, form a hydraulic chamber area (area included in the area 42) having a substantially circular shape (substantially circular ring shape as a whole), as seen from a section. The predetermined fluid to be measured is hermetically enclosed in the fluid-sealed chamber 40. For example, an operating oil is fully hermetically enclosed therein without bubbles.

The pressure sensor 44 can detect a change in pressure of the fluid to be measured (operating oil) hermetically enclosed in the fluid-sealed chamber (hydraulic chamber) 40. The pressure sensor 44 is disposed at a part of the cylinder 8 and has a detection unit 45 configured to communicate with an inside of the fluid-sealed chamber (hydraulic chamber) 40. More specifically, the sensor mounting hole 18 penetrating the annular flange 14 in the horizontal direction is provided at a predetermined position of the annular flange 14 of the cylinder 8,. The pressure sensor 44 is fitted into the sensor mounting hole 18 from an outside of the annular flange 14 and is mounted and fixed so that the detection unit 45 faces toward the fluid-sealed chamber (hydraulic chamber) 40 (refer to FIG. 2).

The outer surface 15 is provided with a pressure sensor contact surface part 17 protruding in a thick shape toward the outside of the annular flange 14 at the position at which the sensor mounting hole 18 of the annular flange 14 is formed. Therefore, after inserting the detection unit 45 of the pressure sensor 44 into the sensor mounting hole 18, a flange surface part 46 of the pressure sensor 44 can be contacted and closely fixed to the pressure sensor contact surface part 17.

The pressure sensor 44 is not particularly limited and selectively used within the scope of the present disclosure. For example, the pressure sensor 44 has a well-known structure of measuring a pressure, converting the pressure into a voltage signal and transmitting the same.

According to the embodiment, the bearing device to be disposed at the vehicle-side of the suspension 1 is improved so that the bearing device serves as a load measurement device configured to measure the load in a compression direction (which is the same direction as the vertical direction denoted with the arrow 100, in the drawings) acting on the bearing. That is, the bearing device is configured as described above so that the bearing raceway ring (outer ring) 25 serves as a piston. When the load in the compression direction (which is the same direction as the vertical direction denoted with the arrow 100, in the drawings) acts on the bearing, the outer ring (piston) 25 is pushed into the cylinder 8 (the annular space 50 between the cylindrical part 19 and the annular flange 14) while sliding contacting with the cylindrical part 19 and annular flange 14 of the cylinder 8.

Thereby, the operating oil (fluid to be measured), which is hermetically enclosed in the fluid-sealed chamber (hydraulic chamber) 40 configured by the fitting area (fitting area until the inner seal 33) 41 between the outer ring 25 and the cylindrical part 19 of the cylinder 8, the space area (an area including a hydraulic chamber area having the first groove portion 52 and the second groove portion 54 and the substantially circular ring shape) 42 between the outer ring 25 and the inner surface 12 of the mounting part main body 10 of the cylinder 8 and the fitting area (fitting area until the outer seal 34) 43 between the outer ring 25 and the annular flange 14, is compressed by the outer ring (piston) 25 so that a pressure in the fluid-sealed chamber (hydraulic chamber) 40 increases.

Since the pressure in the fluid-sealed chamber (hydraulic chamber) 40 and the axial load have a proportional relation, when the change in the pressure in the fluid-sealed chamber (hydraulic chamber) 40 is measured by the pressure sensor 44, it is possible to measure the load in the compression direction (which is the same direction as the vertical direction denoted with the arrow 100, in the drawings) acting on the suspension 1. The measured data (result) can be checked by a digital display screen or the like disposed in the vehicle or the like.

The subject application is based on a Japanese Patent Application No. 2014-082509 filed on April 14, 2014, of which the entire contents is herein incorporated by reference.

### Description of Reference Numerals

1: suspension, 2: shock absorber, 3: rod, 4: coil spring, 6: mount, 8: first member (cylinder), 9: mounting part, 10: mounting part main body, 14: annular flange, 19: cylindrical part, 23: second member (washer), 25: bearing raceway ring (outer ring), 28: outer ring raceway, 35: bearing raceway ring (inner ring), 37: inner ring raceway, 38: rolling element, 39: holder, 40: fluid-sealed chamber (hydraulic chamber), 44: pressure sensor, 45: detection unit, 50: annular space, 52: first groove portion, 54: second groove portion, 100: vertical direction

## Claims

1. A load sensor-equipped bearing device comprising:
a first member having a mounting part to be fixed to a vehicle-side and a cylindrical part protruding from the mounting part;
a second member fixed to an end portion of the cylindrical part of the first member in a cylinder-axis direction and disposed at a wheel-side;
a pair of bearing raceway rings interposed between the first member and the second member and configured to rotatably support an axial load about the cylindrical part serving as an axis center, and
a rolling element incorporated between the pair of bearing raceway rings,
wherein the bearing raceway ring disposed close to the mounting part is disposed on an outer periphery of the cylindrical part,
wherein a fluid-sealed chamber in which a fluid to be measured is hermetically enclosed is provided between the first member and the bearing raceway ring disposed close to the mounting part,
wherein a pressure acting on the fluid to be measured changes as the bearing raceway ring disposed close to the mounting part moves in the cylinder-axis direction, and
wherein the fluid-sealed chamber is provided with a pressure sensor capable of detecting the change in the pressure of the fluid to be measured.

2. The load sensor-equipped bearing device according to claim 1,
wherein the first member is a cylinder configuring a suspension and to be fixed to the vehicle-side,
wherein the second member is a washer configuring the suspension and configured to contact one end of a spring,
wherein the pair of bearing raceway rings include an outer ring disposed on the outer periphery of the cylindrical part of the cylinder and an inner ring disposed at the washer, and the pair of bearing raceway rings is configured to rotatably support the axial load,
the fluid-sealed chamber is formed between the mounting part and the cylindrical part of the cylinder and the outer ring, and
the pressure sensor is provided to the fluid-sealed chamber via the mounting part of the cylinder and a detection unit of the pressure sensor is disposed to face toward an inside of the fluid-sealed chamber.
